# EUROPEAN PATENT SPECIFICATION

(11) **EP 1 310 747 B1**
(45) Date of publication and mention of the grant of the patent: **20.06.2007**
(21) Application number: 02079671.0
(22) Date of filing: 08.11.2002
(51) Int. Cl.: F24J 2/04, F24J 2/52, H01L 31/042

(54) **Solar panel assembly**
Solarpaneelanordnung
Ensemble de panneau solaire

(30) Priority: 08.11.2001 NL 1019326
(43) Date of publication of application: 14.05.2003
(73) Proprietor: Ubbink B.V., 6984 AA Doesburg (NL)
(72) Inventor: Van Schellebeek, Dirk Johannes, 6715 LK Ede (NL)
(74) Representative: Ferguson, Alexander

(56) References cited:
- EP-A- 1 170 806
- NL-C- 1 011 047
- US-A- 4 674 244
- US-A- 5 505 788
- PATENT ABSTRACTS OF JAPAN vol. 2000, no. 09, 13 October 2000 (2000-10-13) -& JP 2000 179094 A (FUJITA HIDEO), 27 June 2000 (2000-06-27) -& DATABASE WPI Section PQ, Week 200041 Derwent Publications Ltd., London, GB; Class Q45, AN 2000-471183 XP002204076 & JP 2000 179094 A (FUJITA H), 27 June 2000 (2000-06-27)

## Description

The invention relates to an assembly of a solar panel, such as a PV panel and a holder for it, for placement in a sloping roof. Such solar panels have a surface comparable to the surface of a number of tiles.

Such assemblies are widely known, reference may for instance be made to Dutch patent 1011047. The known assembly comprises a synthetic plate forming both a support for the solar panel and a closed water retaining plane situated underneath it. It is possible here to first place the plate in the roof, when the tiles have been removed prior to that, and the water retaining function of the roof being maintained by the plate. After that there is time to place the PV panel. It is also possible to place the assembly as a whole.

At the upper side, the plate of the known assembly is provided with an elevated support for the panel, and along the longitudinal edges provided with flanges that extend beyond the support and the panel for forming a hidden gutter underneath the contiguous tiles. At the upper edge a comparable provision has been made, and at the lower edge a strip of lead or a preformed build-in strip. In the known assembly horizontal flanges therefore extend all around from the panel after it has been placed on the plate. As a result it is difficult to realise a close arrangement of the PV panels. For placement of two PV panels adjacent to each other a double design of the plate is suggested.

Another assembly is known from Dutch patent 1008846, and comprises a synthetic plate having an elevated H-shaped support profile which is relatively rigid and a broad circumferential flange provided with several profile forms which flange is relatively flexible. The solar panel is supported on the support profile by means of two U-shaped profiles. When placing several panels adjacent to each other the flanges are placed with a large overlap over each other.
An assembly as described in the preamble of claim 1 is known from US-A-5.505.708.

It is an object of the invention to provide an assembly of the type mentioned in the preamble that is easy to handle.

It is a further object of the invention to provide an assembly of the type mentioned in the preamble which is easy to put together by means of simple components.

It is a further object of the invention to provide an assembly of the type mentioned in the preamble with which a close placement can be realised.

It is a further object of the invention to provide an assembly of the type mentioned in the preamble with which expansion can easily be realised.

It is a further object of the invention to provide an assembly of the type mentioned in the preamble with which efficient use is made of material.

At least one of these objects is achieved according to the invention by means of an assembly as described in claim 1.

The corrugated plate is easy to make, for instance by means of setting, rolling or pressing, or available on the market in a larger size and then cutting it to the wanted size. The gutter plates are easy to connect to each other, by fitting the gutters into each other, without particular, extra integrally formed profiles being necessary. The gutters create ventilation ducts underneath the panel as well as dewatering channels. As a result of their shape they furthermore provide some rigidity to the plate, as a result of which the thickness of the plate material can be kept limited.

The connection one to the other is made easy. The end edges can also be nested in each other then, for forming an overlap with adjacent plates, either downwards or upwards, considered along the roof plane.

The plate width can here be kept limited to the width of the panel possibly half or a whole corrugation length or even less. At the end edges a small overlength will be necessary for forming an overlap.

Preferably a corrugation top is situated at one longitudinal edge and a corrugation hollow at the other longitudinal edge. As a result the overlap at that location can partially coincide with the panel, because of which the panels that are supported directly on the plates can be placed closely together.

The tops of the corrugations form flat support strips, as a result of which as it were a large support surface is offered, yet regularly interrupted by the hollows of the gutters.

The gutters extend in a longitudinal direction, which comes to lie parallel to the roof pitch, both longitudinal edges of the plate preferably being integrally formed as a downwardly inclined extending edge strip and an upwardly inclined extending edge strip, respectively. As a result, at the location of the connection of two adjacent plates, there is some freedom of placement in a direction transverse to the gutters while keeping the water retaining function.

Preferably the upwardly extending edge strip at the plate side changes into a flat gutter bottom and the end edge of said edge strip is situated at horizontal distance from the longitudinal edge of the panel. Thus the freedom of placement is improved, the downwardly inclined edge strip being easy to insert in the adjacent gutter and the flat gutter bottom offering a possibility to shift.

Preferably the flat gutter bottom is at least partially situated underneath the panel edge, the plate thus remaining limited in dimensions.

The gutter bottom, at the boundary situated at the plate side, preferably being situated at a horizontal distance from the longitudinal edge of the panel corresponding to the horizontal extension of the inclined edge strip protruding at the other longitudinal edge.

It is furthermore preferred that the plate is manufactured of metal, thus keeping the cost price low.

In a further development of the assembly according to the invention the plate at the edge which is intended to lie at the lower side on a sloping roof is provided with a connection strip which is connected, preferably is detachably connected, to the edge for discharge of water from the gutters to the upper surface of roof covering lying underneath it, such as tiles. The connection strip can simply be arranged on the plate which with the lower edge connects to the roof covering. No second, deviating plate shape has to be made available.

In an advantageous manner the connection strip can be two-part, namely a first connection member to be connected to the lower edge of the plate and a second connection member to be connected to the first connection member and adjusted to the shape of the surface of the roof covering. Thus the part that has to be made available for the specific connection can be kept small: particular shapes of tiles only need to be incorporated in the second connection member. The first connection member can be universal.

Alternatively the connection strip may rest on a (counter) flashing or the like laid on the upper edge of the adjacent tiles and have a shape to snugly abut the lower edge and lie underneath the lower edge of the plate to close off the space below the plate. The connection strip may for instance be trapezium-shaped in longitudinal-section.

In case the panel is attached to the plate by means of attachment means situated immediately adjacent to the panel at the end edges, use is made of the space needed for the overlap in pitch direction and the attachments are permanently accessible. The accessibility is increased when the attachment means engage the uppers sides of the gutters of the plate.

From a further aspect the invention provides an arrangement of a sloping roof and a number of assemblies according to the invention, the plates being placed with the longitudinal direction of the corrugations in the pitch direction.

From another aspect the invention provides an assembly of a PV panel and a holder for it, which holder comprises a plate for supporting the panel in sloping roof, which plate forms a closed surface of the order of magnitude of the panel, in which the plate at least at the longitudinal edges is corrugated and at least at one of the longitudinal edges extends at least partially under said panel longitudinal edge with said corrugations. The connection between the plates of adjacent assemblies then partially coincides with the panels, as a result of which the occupation of space is saved on and the panels can be placed close together.

Further preferred embodiments of this are described in the sub claims, the contents of which should be deemed inserted here.

It is noted that from US patent specification 5.505.788 a support for PV modules for flat roofs is known, which in a cross-section is multiple trapezium-shaped and forms channel-shaped accommodation spaces for a material that is able to absorb a high amount of energy per unit of weight and via the channel walls transfers heat to a convecting fluid such as air.

From another aspect the invention provides a method for placing PV panels on a sloping roof, a holder with panel according to any one of the preceding claims being placed on the roof where no roof covering such as tiles is present, this action being repeated, while bringing opposite edges of the plates in question in overlap with each other, and a connection being arranged at the location of the transition of a plate to the roof covering contiguous to it at the lower side.

In a simple manner two plates can be placed in pitch direction above each other once or several times. The gutters are in line with each other.

Preferably the plates of adjacent assemblies are brought in overlap with each other which, at least partially is situated underneath one of the panels.

The invention will be elucidated on the basis of a number of exemplary embodiments shown in the attached drawings, in which:
Figure 1 shows a view in perspective of an exemplary embodiment of an assembly according to the invention;
Fig. 1A shows a schematic end view of two assemblies of figure 1 connected to each other;
Figure 2 shows the assembly of figure 1, placed on a roof;
Figure 3 shows a detail of a connection between two assemblies according to figure 1, after being placed on the roof;
Figure 4 shows a detail of a connection of the lower edge of the assembly of figure 1 on a roof covering;
Figure 5 shows a view of a group of assemblies according to figure 1, placed in a roof;
Figure 6 shows a detail of the transition between two assemblies according to figure 1 situated above each other in the roof;
Figure 7 shows a schematic view in cross-section of the arrangement of figure 8 in the assembled situation;
Figure 8 shows a view in exploded situation of an alternative embodiment of the connection at the location of the lower edge of an assembly of figure 1 on a roof covering.

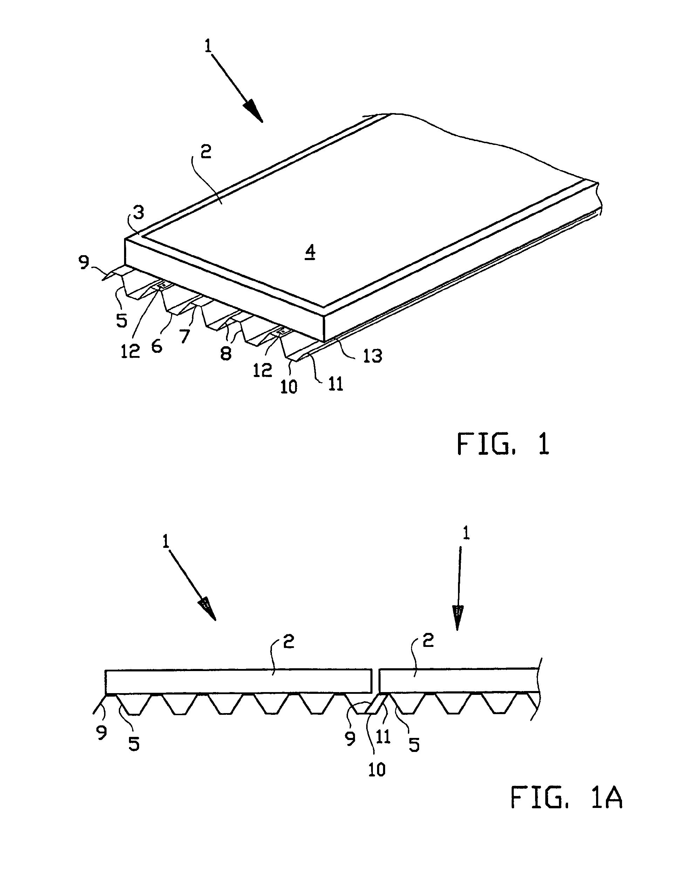

The assembly 1 shown in figure 1 comprises a solar panel in the form of a PV panel, having an active surface 4 of PV cells in a frame 3. At both end sides of the frame 3 attachments lips 12 have been provided.

The assembly 1 furthermore comprises a -set- metal support plate 5, which considered in cross-section has a sheet pile wall profile, having bottom strips 6 and top strips 7, which are connected to each other by means of straight, inclined sides 8, which are for instance at an angle of 40-45 degrees. The amplitude is for instance 20 mm. Here trapezium shaped gutters are provided, which continue over the entire length of the support plate 5 and end open. The plate may have a slight thickness of for instance less than 1 mm, such as 0.6 mm, for some deformability at the location of overlaps.

By means of attachment lips 12 the frame 3 and thus the panel 2 is attached to top strips 7 of the support plate 5. Here pop rivets or bolt/nut connections may have been used.

As shown in figure 1 the support plate 5 at the left edge projects with an inclined edge strip 9, which is equally oriented to corresponding inclined walls 8, but in this example, is slightly shorter. At the other longitudinal edge a gutter 10 has been formed, which with a raised inclined edge strip 11 extends to a vertical plane in which the edge side at that location of the frame 3 is situated. The inclined side 11 is slightly shorter than corresponding inclined side 8, so that a longitudinal slit 13 is left free, through which an inclined edge strip 9 of adjacent support plate 5 of a next assembly 1 can be inserted. In this way two assemblies 1 can -at least almost- be tightly placed together in a roof.

The corrugation length can also be chosen differently in relation to the width of the panel 2, to for instance let the gutter 10 situated at the right longitudinal edge extend a little beyond the longitudinal side of the frame 3. At the longitudinal edge a deviating gutter width could also be opted for. In that case, as is shown in figure 1A, freedom is provided in the mutual position of two adjacent assemblies 1. In figure 1A said play of placement equals the width of the bottom strip 6. In case the strips 9 and 11 would extend vertically and the corrugation would be straight, the gutter 10 could extend entirely beyond the panel longitudinal edge, in case of a strip 9 depending from the longitudinal edge of the panel 2, for providing a large degree of shiftability. However the plates then cannot be nested, or less so, near the transitions to assemblies situated underneath or above.

At the end edges the support plate 5 only extends to a limited degree. At the upper edge this may even be limited to the necessary overlap with the tiles situated above it or support plate of a next assembly, for instance 10 cm. In case it is also desirable to make the attachment means for the panel 2 on the support plate 5, when those attachment means are present at that location, accessible there, a free strip of for instance 2 cm is added then to that end. A protruding strip for the attachment lips will then also be necessary at the lower edge shown.

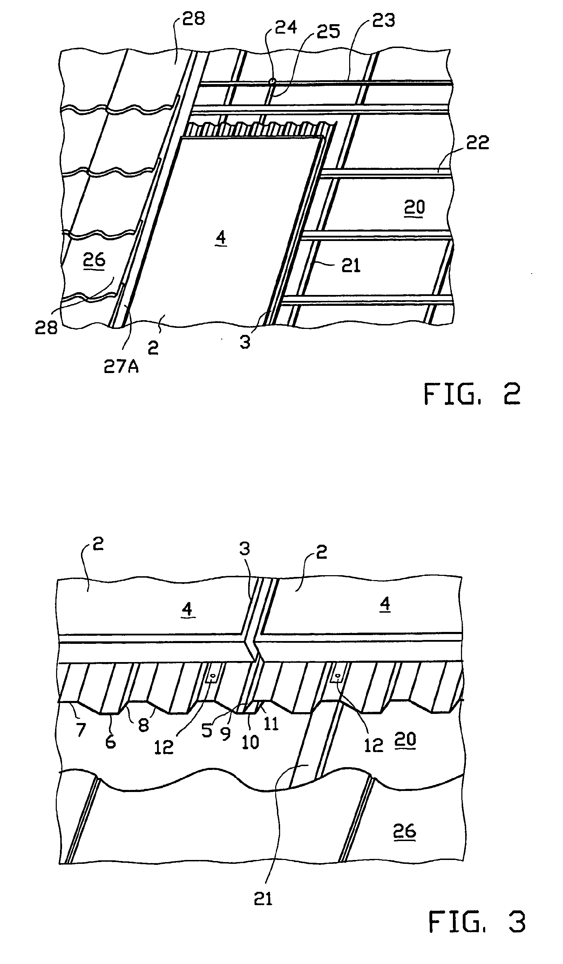

In figure 2 a sloping roof 20 is shown, having counterbattens 21 and battens 22. Furthermore sleeves 23, 25 are shown having nodal point 24, in which electrical conductors have been accommodated for conducting electricity from the assemblies 1 to a roof passage, and from there to a point below the roof.

On the battens 22 tiles 26 are placed in the usual manner.

The assembly 1 shown has been placed on the battens 22, and at the left longitudinal edge a connection strip 27 has been placed between the inclined edge strip 9 of the support plate 5 and the longitudinal edges 28 of the tiles 26 in order to keep the water retaining function. The longitudinal edges 28 of the tiles extend over the edge strip 27. The edge strip 27 has a somewhat gutter-shaped profile and may be obtained through (vacuum)moulding. The edge strip 27 may preferably be designed as a hidden gutter, particularly as described in Dutch patent 1008048.

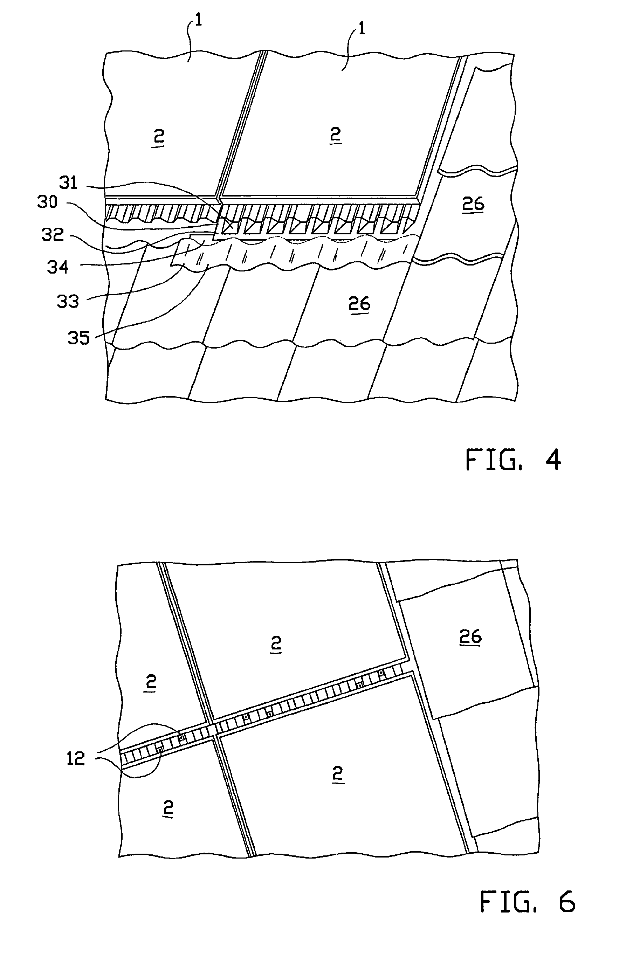

In figure 3 the transition area between two assemblies 1, in the embodiment of figure 1A, is shown in the situation on the roof 20. As can be seen the lowermost edge of the inclined edge strip 9 extends down to the bottom strip 6, and it can still be slid over a small distance to the left, in order to bring the frames 3 of both assemblies 1 -at least almost- against each other.

In figure 4 it is shown in which way the transition of the bottom row of assemblies 1 to the tiles 26 can take place, keeping the water retaining and water discharging functions. Against the lower side of the end edge of the support plate 5 a preformed connection strip 30 has been attached to that end, using means that are not further shown, which connection strip 30 has a profiled portion 31, which snugly connects to the profile of the support plate 5, and a straight strip 32. The transition to the tiles 26 takes place here by means of a counter flashing 33, provided with a straight strip 34, for underlying connection, with overlap, to the strip 32, and with strip 35 connected thereto which has been modelled after the shape of the tiles 26. The flashing 33 can also be replaced by a preformed strip, possibly adjusted to the type of tile. The connection strip 30 can here be kept standard.

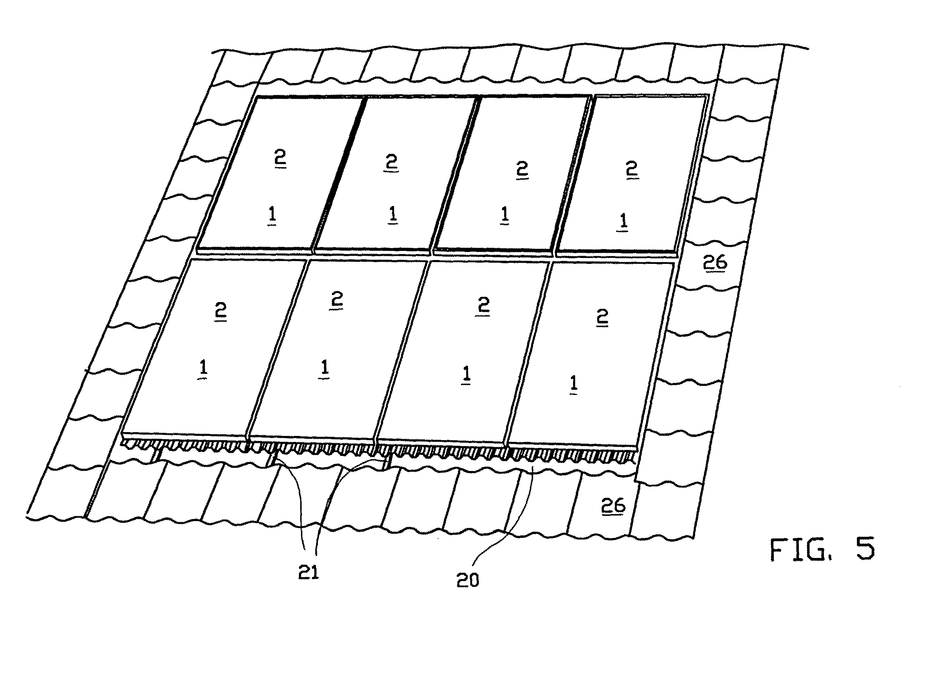

In figure 5 an arrangement of eight assemblies 1 in a tile roof is shown, in which the lower connection to the tile roof has been left out. It can be seen that the eight panels 2 are positioned in tight formation adjacent to each other, in which the surface available is used as efficiently as possible. The gutters of the support plates 5 of assemblies 1 positioned above each other lie in line with each other, and provide a discharge possibility which is scarcely smaller than those on the adjacent tile roof. Additionally the gutters provide sufficient ventilation for the lower side of the panels 2. The gutters render it possible to mutually shift assemblies 1 situated above each other until at the wanted mutual distance.

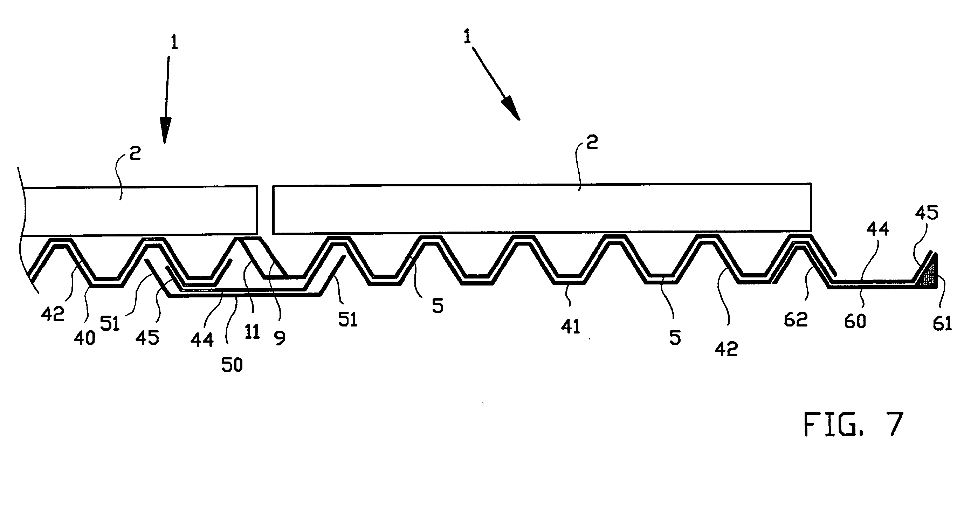

In figure 6 the transition between two assemblies 1 situated above each other is shown in detail. The attachment lips 12 here remain accessible to be able to easily replace a panel 2, when necessary, the support plate 5 in question can then remain lying in the roof. Because the attachment lips 12 are attached to the top strips 7 the accessibility has been increased.

However, when the panel 2 is attached to the support plate 5 in a different manner, for instance at the lower side, within the frame 3, and in that case being able to detach the panel 2 in the roof was not opted for, the aforementioned strip at the lower edge can be left out. The panels 2 situated above each other may then be placed almost in square joint.

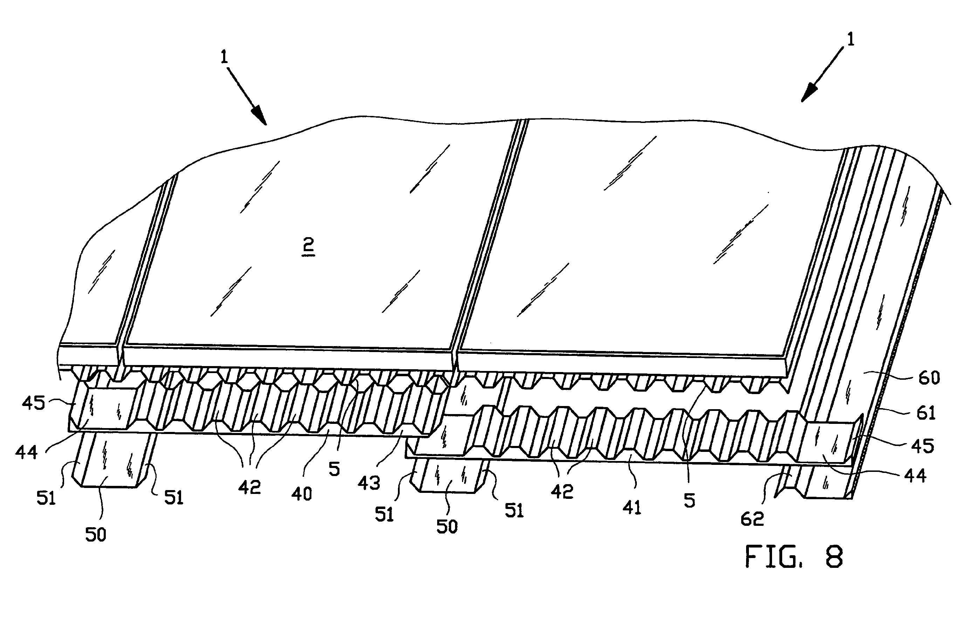

In figures 7 and 8 an alternative arrangement is shown of the connection area between the lower edge and a side edge of a number of assemblies 1 and a tile roof.

A hidden gutter 60 is supported on battens that are not shown, which gutter extends in the direction of the roof pitch and which is made of synthetic material and is limited to the sides by a raised synthetic foam strip 61 having closed cells and a raised inclined edge 62. The synthetic foam strip 61 forms a retaining means for water in the hidden gutter 60, and through compliancy may connect to the tiles that extend along the solar panel 2, in the direction of the roof pitch. In this way a watertight connection to the tiles to the side is obtained.

For the connection in downward direction of the roof in this example use is made of strip-shaped build-in profiles 40 and 41, which are substantially equal to each other, except as regards the ends. The build-in profiles 40, 41 are made of synthetic material and have a number of trapezium-shaped elevations 42, that fit in the trapezium-shaped tops/hollows of the support plates 5. The build-in profiles 40, 41 are open at the upwardly turned longitudinal edge and are closed at the downwardly turned longitudinal edge, which can be seen on the drawing of figure 8, by longitudinal wall 43.

At the left end as seen in the drawing, the build-in profile 40 changes into a plate part 44, which at the end is limited by a raised inclined edge 45. The build-in profile 41 at both longitudinal ends changes into plate parts 44 and at those ends is limited by raised inclined edges 45.

The dimensions of the plate parts 44 is adjusted to the dimension of the hidden gutter 60, so that said parts fit well into each other, as can be seen in the cross-section according to figure 7.

Below the transitional areas between two support plates 5 connected to each other, a connection gutter 50 which extends along the roof pitch and is laid on the battens of the roof is arranged, which is provided with raised inclined longitudinal edges 51, as can also be seen in figure 7.

The raised edges of both the hidden gutter 60 and the connection gutters 50 can be inserted in the open longitudinal edges of the build-in members 40, 41 but downwards the space available for movement is closed by the longitudinal walls 43.

Between the lower ends of the connection gutters 50 and the hidden gutter 60 and the battens a part of the strip of lead or counter flashing (not shown) is laid, which in downward pitch direction runs upwards in order to be laid over the upper end of the connecting first row of tiles that is not shown.

With the connection gutters 50 it is almost ruled out that in case of large pressure differences moisture is able to penetrate the space under the support plates 5 from above through the overlap between adjacent support plates 5. The connection gutter 50 is no impediment in the mutual shiftability of adjacent support plates 5.

## Claims

1. Assembly (1) of a solar panel (2), such as a PV panel, and a holder (5) for it, which holder comprises a plate (5) for supporting the panel (2) in a sloping roof, which plate forms a closed surface of the order of magnitude of the panel, the plate being formed like a corrugated gutter plate, the panel (2) being attached to the plate by means of attachment means, **characterized in that** the plate (5) has continuous gutters which create ventilation ducts underneath the panel (2) as well as dewatering channels, the gutters being formed having a trapezium-shaped cross-section, such as a sheet pile wall profile (5), wherein the tops of the corrugations form flat support strips (7), panel attachment means (12), such as lips, being situated adjacent to the panel (2) at its end edges, the attachment means (12) engaging the flat upper side (7) of the gutters of the plate (5).

2. Assembly (1) according to claim 1, a corrugation top being formed at one longitudinal edge and a corrugation hollow (10) at the other longitudinal edge.

3. Assembly (1) according to claim 1 or 2, the gutters extending in a longitudinal direction, which comes to lie parallel to the roof pitch, both longitudinal edges of the plate being integrally formed as a downwardly inclined extending edge strip (9) and an upwardly inclined extending edge strip (11), respectively.

4. Assembly (1) according to claim 3, the upwardly extending edge strip (11) at the plate side changing into a flat gutter bottom (10) and the end edge of said edge strip being situated at horizontal distance from the longitudinal edge of the panel, the flat gutter bottom (10) preferably at least partially being situated underneath the panel edge (13).

5. Assembly (1) according to claim 4, the gutter bottom, at the boundary situated at the plate side of the gutter bottom, being situated at a horizontal distance from the longitudinal edge of the panel corresponding to the horizontal extension of the inclined edge strip (9) protruding at the other longitudinal edge.

6. Assembly (1) according to any one of the preceding claims, the plate (5) being manufactured of metal, preferably through deformation, such as by rolling or pressing.

7. Assembly (1) according to any one of the preceding claims, the plate (5) at the edge which is intended to lie at the lower side on a sloping roof being provided with a connection strip (30;40, 41) which is connected, preferably is detachably connected, to the edge for discharge of water from the gutters to the upper surface of roof covering lying underneath it, such as tiles.

8. Assembly (1) according to claim 7, the connection strip (30) being two-part, namely a first connection member (31) to be connected to the lower edge of the plate and having a straight end edge and a second connection member (32) to be connected to the first connection member and adjusted to the shape of the surface of the roof covering.

9. Method for placing solar panels on a sloping roof, whereby a holder (5) with panel (4) according to any one of the claims 1- 8 is being placed on the roof where no roof covering such as tiles is present, this action being repeated, while bringing opposite edges of the plates in question in overlap with each other, and a connection being arranged at the location of the transition of a plate to the roof covering contiguous to it at the lower side.

10. Method according to claim 9, two plates in pitch direction being placed above each other.

11. Method according to claim 9 or 10, the plates of adjacent assemblies being brought in overlap with each other which, at least partially is situated underneath one of the panels.

## Patentansprüche

1. System (1) eines Solarzellenelements, wie eines PV-Elements, und eines Halters (5) dafür, welcher Halter eine Platte (5) umfaßt zur Unterstützung des Elements (2) in einem geneigten Dach, welche Platte eine geschlossene Oberfläche in der Größenordnung des Elements bildet, wobei die Platte als eine wellenförmige Rinnenplatte gebildet ist, wobei das Element (2) durch Befestigungsmittel an der Platte befestigt ist, **dadurch gekennzeichnet, daß** die Platte (5) durchgehende Rinnen hat, die sowohl Lüftungskanale unter dem Element (2) als Entwässerungskanäle hervorbringen, wobei die Rinnen mit einem trapezförmigen Querschnitt, wie einem Spundwandprofil (5), gebildet sind, wobei die Spitzen der Wellen platte Stützstreifen (7) bilden, wobei die Elementbefestigungsmittel (12), wie Lippen, angrenzend an den Endrändern des Elements (2) gelegen sind, wobei die Befestigungsmittel (12) die flache Oberseite (7) der Rinnen der Platte (5) angreifen.

2. System (1) nach Anspruch 1, wobei an einem Längsrand eine Wellenspitze und an dem anderen Längsrand ein Wellental (10) gebildet ist.

3. System (1) nach Anspruch 1 oder 2, wobei die Rinnen sich in einer Längsrichtung erstrecken, welche parallel zu der Dachneigung zu liegen gelangt, wobei die beiden Längsränder der Platte integral als einen schräg abwärts reichenden Randstreifen (9) beziehungsweise einen schräg aufwärts reichenden Randstreifen (11) gebildet sind.

4. System (1) nach Anpsruch 3, wobei der aufwärts reichende Randstreifen (11) an der Plattenseite in einen flachen Rinnenboden (10) übergeht und der Endrand dieses Randstreifens auf horizontalem Abstand des Längsrandes des Elements gelegen ist, wobei der flache Rinnenboden (10) vorzugsweise zumindest teilweise unter dem Elementrand (13) gelegen ist.

5. System (1) nach Anspruch 4, wobei der Rinnenboden an der an der Plattenseite gelegenen Begrenzung auf einem horizontalen Abstand vom Längsrand des Elements gelegen ist, übereinstimmend mit der horizontalen Streckung des an dem anderen Längsrand hervorragenden schrägen Randstreifens (9).

6. System (1) nach einem der vorhergehenden Ansprüche, wobei die Platte (5) aus Metall hergestellt ist, vorzugsweise durch Verformen, wie durch Walzen oder Pressen.

7. System (1) nach einem der vorhergehenden Ansprüche, wobei die Platte (5) an dem Rand, welcher bestimmt ist um unten auf einem neigenden Dach zu liegen, mit einem damit vorzugsweise abnehmbar verbundenen Anschlußstreifen (30; 40,41) für Abfuhr von Wasser aus den Rillen zu der oberen Oberfläche von darunten gelegenen Dachbeschichtung, wie Dachziegeln, versehen ist.

8. System (1) nach Anspruch 7, wobei der Anschlußstreifen (30) zweiteilig ist, nämlich ein erstes Anschlußteil (31) das mit dem Unterrand der Platte zu verbinden ist und einen rechten Endrand hat und ein zweites Anschlußteil (32) das auf das erste Anschlußteil anzuschließen ist und auf der Form der Oberfläche der Dachbeschichtung abgestimmt ist.

9. Verfahren zum Aufstellen von Solarzellenelementen auf einem geneigten Dach, wobei ein Halter (5) mit Element (4) nach einem der Ansprüche 1-8 auf dem Dach angeordnet wird, wo keine Dachbeschichtung wie Dachziegel vorhanden ist, wobei diese Verrichtung wiederholt wird, während die gegenübereinander gelegene Ränder der betreffenden Platte in Überlappung miteinander gebracht werden, und einen Anschluß an der Stelle des Überganges einer Platte zur darauf unten anschließenden Dachbeschichtugng angebracht wird.

10. Verfahren nach Anspruch 9, wobei zwei Platten in Neigungsrichtung übereinander angeordnet werden.

11. Verfahren nach Anspruch 9 oder 10, wobei die Platten von nebeneinander gelegenen Systemen in Überlappung miteinander gebracht werden, die zumindest teilweise unter einem der Elemente gelegen ist.

## Revendications

1. Ensemble (1) de panneau solaire, tel qu'un panneau PV, et d'élément de support (5) pour celui-ci, lequel élément de support comprend une plaque (5) destinée à supporter le panneau (2) dans un toit incliné, laquelle plaque forme une surface fermée de l'ordre d'amplitude du panneau, la plaque étant formée comme une plaque de gouttière ondulée, le panneau (2) étant fixé à la plaque grâce à des moyens de fixation, **caractérisé en ce que** la plaque (5) comporte des gouttières continues qui créent des conduites de ventilation en dessous du panneau (2) ainsi que des canaux d'évacuation d'eau, les gouttières présentant une section transversale en forme de trapèze, comme un profil de rideau de palplanches (5), dans lequel les sommets des ondulations forment des bandes de support plates (7), des moyens de fixation de panneau (12), tels que des lèvres, étant situés à côté du panneau (2) au niveau de ses bords d'extrémité, les moyens de fixation (12) entrant en prise avec les côtés supérieurs (7) des gouttières de la plaque (5).

2. Ensemble (1) selon la revendication 1, un sommet d'ondulation étant formé au niveau d'un bord longitudinal et un creux d'ondulation (10) au niveau de l'autre bord longitudinal.

3. Ensemble (1) selon la revendication 1 ou 2, les gouttières s'étendant dans une direction longitudinale, qui se trouve parallèle à la pente du toit, les deux bords longitudinaux de la plaque étant formés d'un seul tenant en tant que bande de rive inclinée s'étendant vers le bas (9) et bande de rive inclinée s'étendant vers le haut (11), respectivement.

4. Ensemble (1) selon la revendication 3, la bande de rive s'étendant vers le haut (11) au niveau du côté de plaque changeant en un fond de gouttière plat (10) et le bord d'extrémité de ladite bande de rive étant situé à une distance horizontale à partir du bord longitudinal du panneau, le fond de gouttière plat (10) étant de préférence au moins partiellement situé en dessous du bord de panneau (13).

5. Ensemble (1) selon la revendication 4, le fond de gouttière, au niveau de la limite située au niveau du côté de plaque, étant de préférence situé à une distance horizontale à partir du bord longitudinal du panneau correspondant au prolongement horizontal de la bande de rive inclinée (9) faisant saillie au niveau de l'autre bord longitudinal.

6. Ensemble (1) selon l'une quelconque des revendications précédentes, la plaque (5) étant fabriquée de métal, de préférence par l'intermédiaire de déformation, comme par laminage ou pressage.

7. Ensemble (1) selon l'une quelconque des revendications précédentes, la plaque (5) au niveau du bord qui est prévu pour se trouver au niveau du côté inférieur sur un toit incliné étant pourvue d'une bande de connexion (30 ; 40, 41) qui est connectée, de préférence de façon détachable, au bord pour l'évacuation de l'eau à partir des gouttières jusqu'à la surface supérieure de couverture de toit, telle que des tuiles, se trouvant en dessous d'elle.

8. Ensemble (1) selon la revendication 7, la bande de connexion (30) comportant deux parties, à savoir un premier élément de connexion (31) destiné à être connecté au bord inférieur de la plaque et possédant un bord d'extrémité droit et un second élément de connexion (32) destiné à être connecté au premier élément de connexion et ajusté à la forme de la surface de la couverture de toit.

9. Méthode pour placer des panneaux solaires sur un toit incliné, moyennant quoi un élément de support (5) avec un panneau (4) selon l'une quelconque des revendications 1 à 8 est placé sur le toit où aucune couverture de toit telle que des tuiles n'est présente, cette action étant répétée, tout en mettant des côtés opposés des plaques en question en chevauchement l'un avec l'autre, et une connexion étant agencée à l'emplacement de la transition d'une plaque à la couverture de toit qui lui est contiguë au niveau du côté inférieur.

10. Méthode selon la revendication 9, deux plaques dans la direction de pente étant placées l'une au-dessus de l'autre.

11. Méthode selon la revendication 9 ou 10, les plaques d'ensembles adjacents sont mises en chevauchement l'une avec l'autre, lequel chevauchement est au moins partiellement situé en dessous d'un des panneaux.
